# EUROPEAN PATENT APPLICATION

(11) **EP 4 270 309 A1**
(43) Date of publication of application: **01.11.2023**
(21) Application number: 22169784.0
(22) Date of filing: 25.04.2022
(51) Int. Cl.: G06T 7/00

(54) **IMAGE PROCESSING DEVICE AND METHOD**

(71) Applicant: Koninklijke Philips N.V., 5656 AG Eindhoven (NL)
(72) Inventor: WENZEL, Fabian, Eindhoven (NL); EWALD, Arne, Eindhoven (NL); FLAESCHNER, Nick, Eindhoven (NL)
(74) Representative: Philips Intellectual Property & Standards

(57) **Abstract**

The present invention relates to an image processing device and method that may be used for comparative brain imaging. to improve the detection of abnormalities in case of sparse scan history with a considerable time difference between the available images, the image processing device comprises an input (30) configured to obtain a first image and a second image of an object of interest of a subject, wherein the first image has been acquired at a first point in time and the second image has been acquired at a second point in time later than the first image; a processing unit (31) configured to generate a third image that represents an estimated representation of the object of interest at a third point in time by applying a trained algorithm or computing system that has been trained on a plurality of training images showing objects of the same type as the object of interest at different points in time; and an output (32) configured to output the generated third image.

## Description

### BACKGROUND OF THE INVENTION

Detecting brain lesions and other abnormalities can be done by comparative imaging, in which a previous and a current brain MR image are registered and can be compared. Comparative brain imaging can e.g. be used for tracking the progress of multiple sclerosis (MS) patients in order to simplify the visual detection of new white matter lesions. MS patients are frequently scanned during patient care so that differences between baseline and follow-up image are mostly related to new white-matter lesions.

Besides specific disease areas like multiple sclerosis or brain tumors, subjects are not frequently scanned. Thus, in general the scan history of a subject is sparse, i.e., only a few scans (also called "images" herein) for a subject are available.

If the time difference between baseline and follow-up images is large, e.g. a number of years, contrast differences not only are related to abnormalities but also to normal aging, e.g. normal atrophy or normal vascular effects in case of brain aging. Therefore, finding abnormalities is a difficult task, particularly in case of a sparse scan history with a considerable time difference between the available images. The images can generally be any kind of images of the object of interest, such as X-ray images, CT images, MR images, PET images, ultrasound images, etc.

### SUMMARY OF THE INVENTION

It is an object of the present invention how to improve the detection of abnormalities in case of sparse scan history with a considerable time difference between the available images.

In a first aspect of the present invention an image processing device is presented comprising:
- an input configured to obtain a first image and a second image of an object of interest of a subject, wherein the first image has been acquired at a first point in time and the second image has been acquired at a second point in time later than the first image;
- a processing unit configured to generate a third image that represents an estimated representation of the object of interest at a third point in time by applying a trained algorithm or computing system that has been trained on a plurality of training images showing objects of the same type as the object of interest at different points in time; and
- an output configured to output the generated third image.

In a further aspect of the present invention a system is presented comprising:
- an image acquisition device configured to acquire a first image and a second image of an object of interest of a subject, wherein the first image is acquired at a first point in time and the second image is acquired at a second point in time later than the first image; and
- an image processing device as disclosed herein.

In yet further aspects of the present invention, there are provided a corresponding image processing method, a computer program which comprises program code means for causing a computer to perform the steps of the method disclosed herein when said computer program is carried out on a computer as well as a non-transitory computer-readable recording medium that stores therein a computer program product, which, when executed by a processor, causes the method disclosed herein to be performed.

Preferred embodiments of the invention are defined in the dependent claims. It shall be understood that the claimed method, system, computer program and medium have similar and/or identical preferred embodiments as the claimed system, in particular as defined in the dependent claims and as disclosed herein.

The present invention is based on the idea to make use of a trained algorithm or computing system, for instance a trained model or neural network, to generate an image of the object of interest (e.g. the brain of a subject) that "simulates" how the object of interest would look like at a desired point in time if it undergoes normal aging without abnormalities. For instance, if there is only a sparse scan history of a subject available, an estimation of a current hypothetical follow-up image just including effects of healthy aging may be made and a measure quantifying the deviation of the sparse scan history from healthy aging may be determined. Therefore, the disclosed device, system and method can be used for a comparative imaging application (e.g. for comparative brain imaging), in which a visual and/or algorithmic comparison of the hypothetical and true current images can just reveal abnormalities and not the effects of normal aging. Furthermore, they can be used for assessing whether the changes in the scan history of a subject can be explained by normal aging.

According to a preferred embodiment, the processing unit is configured to use a learning system, a neural network, a convolutional neural network or a U-net-like network as trained algorithm or computing system. Generally, the architecture or layout of the trained algorithm or computing system is not essential, but e.g. a learning system or neural network with known or conventional architecture may be used for computing the third image.

In another embodiment applying the trained algorithm or computing system onto the first image by the processing unit includes analyzing, in particular by a convolutional neural network (CNN), the first image to derive image features of the object of interest, and generating, in particular by a generator network, the third image based on the derived image features and information how such kinds of image features evolve over time, in particular age-related atrophy. This provides a simple but effective approach. A CNN operates with convolutional kernels with trained weights, but the approach is purely training-/data-driven.

The processing unit may further be configured to generate the third image by letting the object of interest artificially age by a desired period of time, in particular by letting the object of interest as shown in the first image age by a period of time corresponding to the time difference between the first and second points in time. Hence, in an exemplary application, the first image may be used for generating the third image at a third point in time, which corresponds to the second point in time. The second image and the third image hence show the object of interest at the time period after the first point in time and can thus be directly compared to identify abnormalities.

In an embodiment the processing unit is configured to determine deviations of the second image from the third image and the output unit is configured to output the determined deviations. These deviations are then generally interpreted as abnormalities and not effects of normal aging. Hereby, the processing unit may be configured to quantify and/or qualify the deviations (e.g. with respect to size, number, intensity, etc.) and the output unit is configured to output the determined quantification and/or qualification.

The time difference between the first and second points in time and the time difference between the first and third points in time are generally longer periods, for instance more than one week or more than one month or more than six months or more than one year. This time difference may generally depend on how many images of the object of interest are available and at which intervals the images to be compared have been acquired.

In another embodiment the processing unit is configured to perform a registration of the first and second images before generating the third image and/or to perform a registration of the third and second images after generating the third image. This improves the comparison and detection of abnormalities.

Preferably, the processing unit may be configured to train the algorithm or computing system on a plurality of training images showing objects of the same type as the object of interest at different points in time, wherein the plurality of training image comprises real images and/or synthetic images. Such training images may be taken from available databases or may be artificially created for training purposes. Training is preferably done in advance and offline. The actual generation of a third image and determination of abnormalities, in particular if verified by a user such as an experienced clinician, may be used for training as well. Thus, in an embodiment the computed third image may be used together with the first and second images for training the algorithm or computing system. This may also be used for fine-tuning the algorithm or computing system during the actual use. For instance, an optional online-learning component, e.g. as a function of the processing unit, may be provided for this fine-tuning.

In an embodiment, the processing unit may be configured to train the algorithm or computing system by analyzing, in particular by a convolutional neural network, the plurality of training images to derive image features describing normal appearance of the object overtime to be trained. Image features may hereby be automatically determined as weights for a convolutional neural network such that there is a latent space representation of the image. Weights may not only apply to the encoding part but also to the decoding part, i.e., for the part that recreates an image from its latent space representation. Image features may include one or more of brightness, texture, edges, boundaries, patterns, characteristic structures or points, homogeneity, area, shape, size, or any other features that can be learned and used for training. The use of one or more of these image features (or characteristics) enables a practical implementation of the disclosed solution.

In other embodiments, the first layer of a neural network may comprise image features, meaning that the weights of a convolutional filters will constitute image features. In a deep neural network, further layers with further weights may follow, where the weights do not correspond to image features. In between the first layer (image features) and the deepest layer (which may output a latent space representation of the image) there may be many more layers and weights which neither correspond to latent space nor to image space features.

The processing unit may further be configured to perform a generic training phase for a neural network and a personalization phase as a preprocessing step before generating the third image, in which a part of the network is retrained, in particular on data from the subject of interest. This further improves the personalized detection of abnormalities. Technically, these weights do not differ from each other. In the generic training phase, the weights are jointly optimized, and in the personalization phase, a defined subset of the weights is re-trained using only images of the subject as training pairs. This is often denoted as "freezing" certain weights during specific cycles in the training, i.e., the weights may be fixed/frozen during the personalization phase.

For instance, in an embodiment the processing unit is configured to additionally using the one or more personal characteristics of the subject of the respective image of the plurality of training images to train the algorithm or computing system. Such personal characteristics may include one or more of age, gender, size, weight, medical history,

Generally, the present invention may be applied in different contexts and for use with different objects of interest. One application is in the field of medical image processing where the object of interest is an anatomical organ, for instance the brain or heart. Depending on the anatomy, further pre-processing steps might be utilized such as rigid registration or segmentation of the target anatomy.

### BRIEF DESCRIPTION OF THE DRAWINGS

These and other aspects of the invention will be apparent from and elucidated with reference to the embodiment(s) described hereinafter. In the following drawings
Fig. 1 shows a schematic diagram of an embodiment of a system according to the present invention.
Fig. 2 shows a schematic diagram of an embodiment of an image processing device according to the present invention.
Fig. 3 shows a schematic diagram of an embodiment of an image processing method according to the present invention.
Fig. 4 shows a schematic diagram of an embodiment of a neural network for use in the processing unit.
Fig. 5 schematically shows an embodiment of a U-net and its use in the context of the present invention.

### DETAILED DESCRIPTION OF EMBODIMENTS

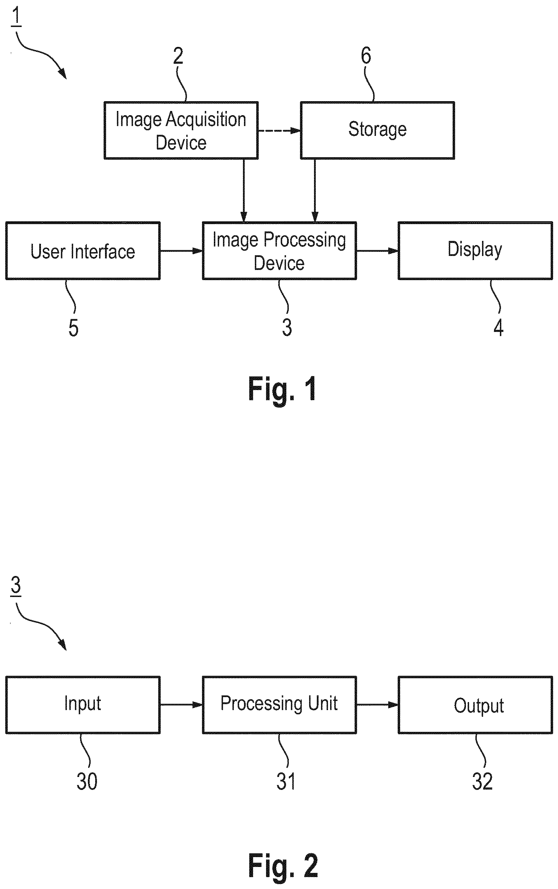

Fig. 1 shows a schematic diagram of an embodiment of a system 1 for image processing according to the present invention, in particular of medical images acquired by an imaging device of any imaging modality (e.g. CT, MR, X-ray, PET, ultrasound, etc.).

The system 1 comprises an image acquisition device 2 that is configured to acquire a first image and a second image of an object of interest of a subject. The first image is acquired at a first point in time and the second image is acquired at a second point in time later than the first image. The first and second images may e.g. be MR images of a patient's brain that are acquired at a difference of weeks, months or even one or more years. The image acquisition device 2 may thus be an imaging device of one of the modalities mentioned above.

The system 1 further comprises an image processing device 3 as will be described below.

The system 1 may further comprise a display 4 configured to display the third image and/or other information obtained by use of the present invention. The display 4 may e.g. be screen or monitor of a computer, laptop, table or workstation. The third image may be shown together with the first image and/or the second image, in particular to recognize deviations between the different images and to illustrate potential abnormalities (e.g. abnormal temporal developments or anomalies based on a comparison to a synthetically "normal" image at a later point in time).

The system 1 may further comprise a user interface 5 configured to enable a user (e.g. a clinician, caregiver, etc.) to select images that shall be subjected to image processing. The user interface 5 may e.g. include one or more of a touch screen, a keyboard, a computer mouse, a pointer or any other means that enable a user to perform the desired function(s).

Still further, the system 1 may comprise a storage 6 for storing images, e.g. a storage in a computer, in a network or in the cloud. Previously acquired images may be stored in the storage 6.

Fig. 2 shows a schematic diagram of an embodiment of a device 3 for processing of images according to the present invention. The device 3 may e.g. be implemented as or in a processor or computer, in software and/or hardware.

The device 3 comprises an input 30 configured to obtain a first image and a second image of an object of interest of a subject. The input 30 may be directly coupled or connected to the image acquisition device 2 and/or may obtain (i.e. retrieve or receive) the images (completely or partly) from a storage, buffer, network, bus, etc. The input may thus e.g. be (wired or wireless) communication interfaces or data interfaces, such as a Bluetooth interface, WiFi interface, LAN interface, HDMI interface, direct cable connect, or any other suitable interface allowing signal transfer to the device 3.

The device 3 further comprises a processing unit 31 configured to generate a third image that represents an estimated representation of the object of interest at a third point in time by applying a trained algorithm or computing system that has been trained on a plurality of training images showing objects of the same type as the object of interest at different points in time. The processing unit 31 may be any kind of means configured to process the obtained images data and generate the third image there from. It may be implemented in software and/or hardware, e.g. as a programmed processor or computer or app on a user device such as a smartphone, smartwatch, tablet, laptop, PC, workstation, etc.

The device 3 further comprises an output 32 configured to output the generated third image. The output 32 may generally be any interface that provides the third image, e.g. transmits it to another device or provides it for retrieval by another device (e.g. a smartphone, computer, tablet, etc.). It may thus generally be any (wired or wireless) communication or data interface.

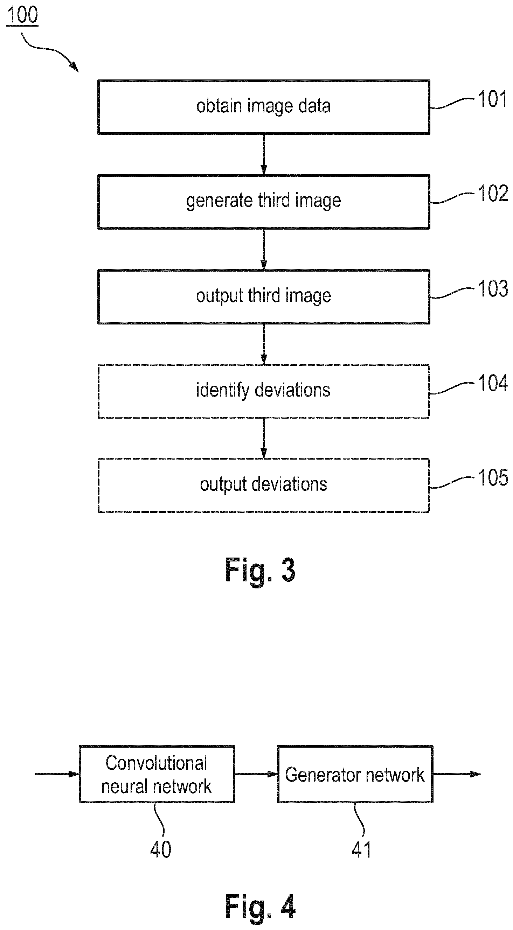

Fig. 3 shows a schematic diagram of a first embodiment of an image processing method 100 according to the present invention. The steps of the method 100 may be carried out by the device 3, wherein the main steps of the method are carried out by the processing unit 31. The method 100 may e.g. be implemented as computer program running on a computer or processor.

In a first step 101 the image data (comprising first and second image) are obtained. In a second step 102 the third image is generated. In a third step 103 the third image is outputted.

In the second step 102 the third image may e.g. be generated by letting the object of interest artificially age by a desired period of time, in particular by letting the object of interest as shown in the first image age by a period of time corresponding to the time difference between the first and second points in time. For instance, if the first image has been acquired one year ago and the second image has been acquired today, the desired period of time by which the first image shall be aged is one year. In other words, the first image is subjected to the trained algorithm or computing system to let it age by one year to generate the third image.

The third image may then be compared with the second image in an optional fourth step 104 (which may be carried out before, in parallel or after the third step 103) to identify deviations between the third image and the second image that may then be interpreted as abnormalities, i.e. changes of the anatomy that are not caused by normal aging, such as abnormal brain changes not caused by normal aging. These deviations may then be outputted (e.g. highlighted in the second image or given as annotations to the second image or as a list) in an optional fifth step 105 (which may be a separate step or part of step 103). Hereby, the deviations may be quantified (e.g. how many deviations) and/or qualified (e.g. how strong are the deviations), which information may be outputted as well. For instance, a value indicating deviation from normal may be outputted.

Applying the trained algorithm or computing system onto the first image may include to analyze the first image to derive image features (such as brightness, texture, edges, boundaries, patterns, characteristic structures or points, homogeneity, area, shape, size, etc.) of the object of interest and to generate the third image based on the derived image features and information how such kinds of image features evolve over time, in particular age-related atrophy. This information has been trained in advance by a plurality of training images, which may be real images and/or artificially created images. For instance, if the disclosed approach shall be used for comparative brain image analysis, the training images are brain images acquired at multiple different points in time to train the algorithm or system how the brain normally ages over time. Depending on the time difference between two actual images, the algorithm or system then knows how to "modify" the first image to create the third image so that it looks like the same brain after this time difference.

It shall be noted that the present invention may not only be used with two images, but also with a series of images of the same object of interest that have been acquired over time. For instance, this may be done such that also non-linear effects of aging (i.e., effects that are linearly develop over time) might be learned by the network. In other words, having more images (and thus more pairs of images at various times) available the "personalized training phase" will lead to a more robust prediction. If there are only two images (one pair) available, the re-trained network might over fit to that one image-pair and not yield reasonable results for any other time difference, but there are multiple images the predicted aging will generalize much better. This may be relevant for the training phase, but can also be useful in the real operation phase.

For the training and the actual application of the algorithm or system, a learning system, a neural network, a convolutional neural network or a U-net-like network may be used. For instance, in an application an architecture of a neural network as shown in Fig. 4 may be used as processing unit for the training and for the application in the generation of the third image. This architecture comprises a convolutional neural network 40 that may be used for analyzing the first image to derive image features and a generator network 41 that may be used for generating the third image based on the derived image features. A U-Net architecture with an encoder part and a decoder part can be found in many successful implementations for varying types of image analysis tasks. It served as the basis for introducing the personalization step. However, alternative approaches may be possible as well. In other embodiments the two neural networks 40 and 41 may be combined into a single network, and other networks may alternatively be used as well.

Convolutional networks are generally quite efficient (i.e., they do not need as much training data as for the simplest architecture which would consist of only fully connected layers) and also typically generalize much better. They are often a main component of an image processing network. A generator network is generally understood as a network that gets something as input (e.g. a latent vector which can either be random or meaningful) and creates an output (typically an image or a word / sentence etc.) which is then (typically during training) classified by a second neural network (often called "discriminator") such that the discriminator trains the generator part (also called "generative part" or "generative network") to produce a realistic output. There are also other ways of doing that, for example the decoding part of variable auto-encoders can also be used as generative networks; then, a generator network may then simply be the decoding branch (e.g. from latent space to image space) of a bigger network (e.g. the U-Net).

The processing unit 31 may further be configured to train the algorithm or computing system on a plurality of training images showing objects of the same type as the object of interest at different points in time. For instance, it may analyze, e.g. by a convolutional neural network, the plurality of training images to derive image features describing normal appearance of the object over time to be trained.

In an embodiment for the training, a training database by be created or used. Given large longitudinal databases of brain scans like the UK biobank, the NAKO, the ADNI database, or the Rotterdam Scan Study, as an example, available diagnostic and other data (like cognitive or psychiatric scores as well as other brain diseases or systematic diseases) may be used to exclude subjects which are considered not to be appropriate for modelling healthy aging. This includes, for example, healthy subjects with a follow-up diagnosis of a neuro-degenerative disease based on clinical symptoms, since changes in the object, e.g. in the brain, are visible earlier, so that corresponding scans would not be suitable for modelling normal aging.

A neural network for use in the training may comprise, as shown in Fig. 4, a convolutional neural network 40 that analyses image data and, during training, results in features describing normal appearance of a brain. A generator network 41, fed by the results of the convolutional neural network 40, generates an individual brain image for a desired time point. Optionally, a recurrent neural network may be used in between to indicate how features evolve over time via healthy aging. However, this task may be performed by one of the networks 40 and 41 instead.

Parameters of the neural network types for image synthesis may be trained by scans in the training database together with the corresponding age of the subject at the time of image acquisition such that for given an additional age value the difference of the synthesized output image and the true output image is minimized.

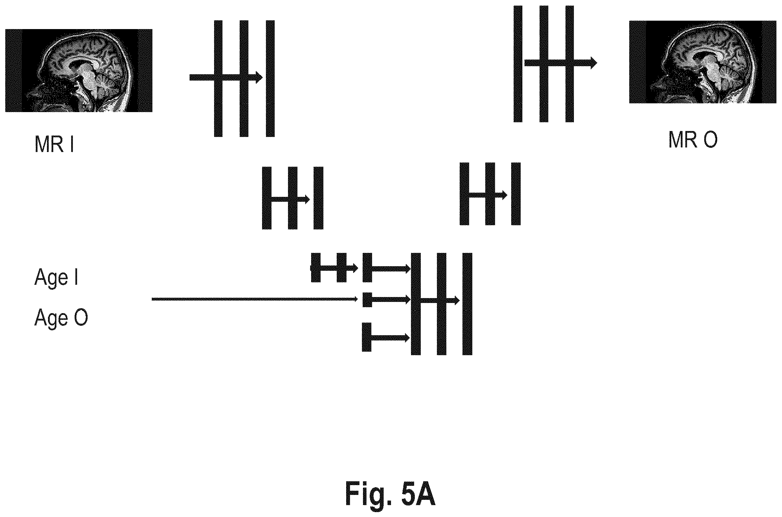

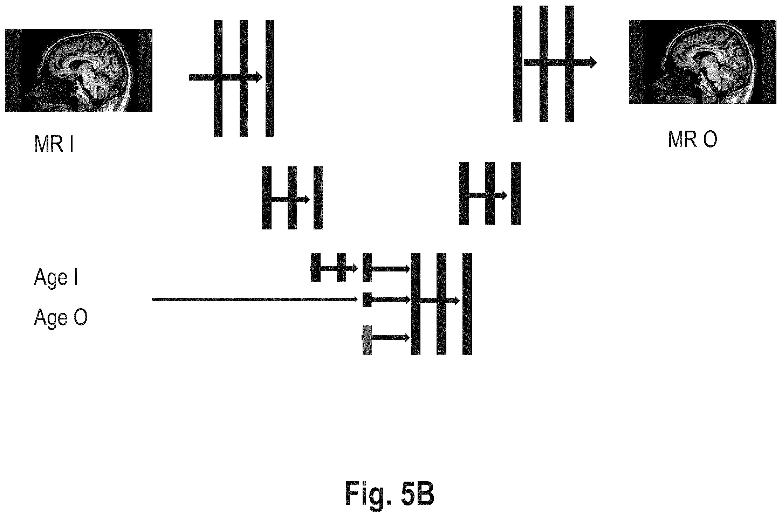

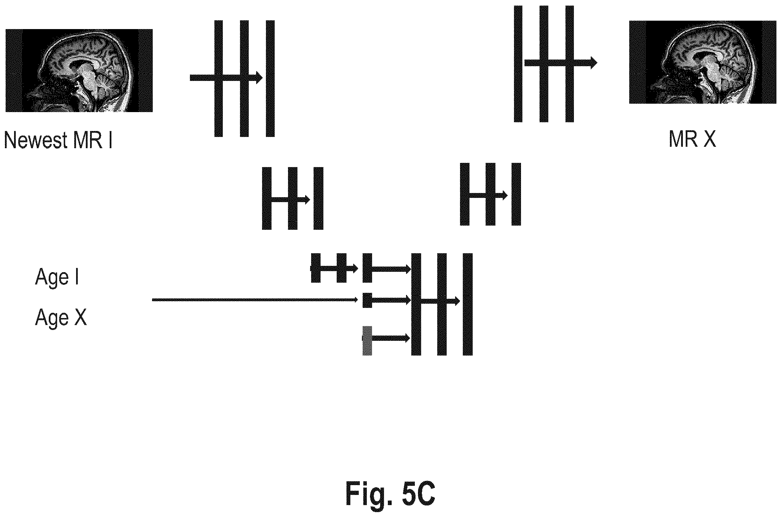

Fig. 5 schematically shows an embodiment of a U-net and its use in the context of the present invention.

Fig. 5A illustrates the generic training phase. The given numbers according to the blocks are specific to image resolution and dimension, and also the number of layers (blocks) might vary, depending on the task. In the generic training phase, the weights for the U-net are trained by minimizing a loss function related to the deviation of the synthetically generated output image MR O to its true counterpart. Training is based on a pair of two input images MR I at a time point T and MR O at a later time point with corresponding time point information as represented with age I and age O. During training, pairs of two input images from the same subject might randomly been drawn from the overall set of training images.

Fig. 5B illustrates a personalization phase with existing scans of the subject of interest. This phase differs from the generic training phase of most parts (marked in black) of the network, since it is using the longitudinal history of the subject of interest, i.e. available images of the subject of interest that have been acquired in the past. Here, (residual) parts (marked in grey as a block connected to the latent space representation at the bottom) of the network are retrained (in a pre-processing step) using the same loss function. Therefore, it also requires pairs of input images (a first image and a second image) and corresponding time points for the subject of interest.

Fig. 5C illustrates an inference phase resulting in an image estimated for the target age. Here, a third image MR X is generated for the current time point given an earlier image MR I and its acquisition date or patient age.

Compared to the known architecture and use of a U-NET, the latent space / bottleneck in the network (at the bottom) includes additional information like the age of the subject at the time of scanning and the "personalization" weights that are trained as shown in Fig. 5A.

In summary, according to the present invention detection of abnormalities, e.g. of brain abnormalities like lesions, is possible by comparing a subject's brain MRI to a previous scan despite some of the differences between images are typically caused by normal aging. A predictive model for personalized normal aging may be built, which may be trained with a database of longitudinal scans of healthy subjects. Given the scan history of a healthy individual, the system is able to (i) estimate a metric indicating the current likelihood of abnormal aging and (ii) estimate a hypothetical current scan based on the history of scans. This pseudo-scan of the subject will be much more suitable for comparison with the true current scan for revealing non-age-related abnormalities.

The present invention may e.g. be used as a software for comparative imaging of medical object, e.g. comparative brain imaging or MR brain change assessment in a medical workstation.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single element or other unit may fulfill the functions of several items recited in the claims. The mere fact that certain measures are recited in mutually different dependent claims does not indicate that a combination of these measures cannot be used to advantage.

A computer program may be stored/distributed on a suitable non-transitory medium, such as an optical storage medium or a solid-state medium supplied together with or as part of other hardware, but may also be distributed in other forms, such as via the Internet or other wired or wireless telecommunication systems.

Any reference signs in the claims should not be construed as limiting the scope.

## Claims

1. Image processing device comprising:
- an input (30) configured to obtain a first image and a second image of an object of interest of a subject, wherein the first image has been acquired at a first point in time and the second image has been acquired at a second point in time later than the first image;
- a processing unit (31) configured to generate a third image that represents an estimated representation of the object of interest at a third point in time by applying a trained algorithm or computing system that has been trained on a plurality of training images showing objects of the same type as the object of interest at different points in time; and
- an output (32) configured to output the generated third image.

2. Image processing device as claimed in claim 1,
wherein the processing unit (31) is configured to use a learning system, a neural network, a convolutional neural network or a U-net-like network as trained algorithm or computing system.

3. Image processing device as claimed in any one of the preceding claims,
wherein applying the trained algorithm or computing system onto the first image by the processing unit (31) includes
- analyzing, in particular by a convolutional neural network (40), the first image to derive image features of the object of interest, and
- generating, in particular by a generator network (41), the third image based on the derived image features and information how such kinds of image features evolve over time, in particular age-related atrophy.

4. Image processing device as claimed in any one of the preceding claims,
wherein the processing unit (31) is configured to generate the third image by letting the object of interest artificially age by a desired period of time, in particular by letting the object of interest as shown in the first image age by a period of time corresponding to the time difference between the first and second points in time.

5. Image processing device as claimed in any one of the preceding claims,
wherein the processing unit (31) is configured to determine deviations of the second image from the third image and
wherein the output unit (32) is configured to output the determined deviations.

6. Image processing device as claimed in claim 5,
wherein the processing unit (31) is configured to quantify and/or qualify the deviations and
wherein the output unit (32) is configured to output the determined quantification and/or qualification.

7. Image processing device as claimed in any one of the preceding claims,
wherein the time difference between the first and second points in time and the time difference between the first and third points in time is more than one week or more than one month or more than six months or more than one year.

8. Image processing device as claimed in any one of the preceding claims,
wherein the processing unit (31) is configured to perform a registration of the first and second images before generating the third image and/or to perform a registration of the third and second images after generating the third image.

9. Image processing device as claimed in any one of the preceding claims,
wherein the processing unit (31) is configured to train the algorithm or computing system on a plurality of training images showing objects of the same type as the object of interest at different points in time, wherein the plurality of training image comprises real images and/or synthetic images.

10. Image processing device as claimed in claim 9,
wherein the processing unit (31) is configured to train the algorithm or computing system by analyzing, in particular by a convolutional neural network, the plurality of training images to derive image features describing normal appearance of the object over time to be trained.

11. Image processing device as claimed in any one of the preceding claims,
wherein the processing unit is configured to perform a generic training phase for a neural network and a personalization phase as a preprocessing step before generating the third image, in which a part of the network is retrained.

12. Image processing device as claimed in claim 11,
wherein the processing unit (31) is configured to additionally using the age of the subject of the respective image of the plurality of training images to train the algorithm or computing system.

13. System comprising:
- an image acquisition device (2) configured to acquire a first image and a second image of an object of interest of a subject, wherein the first image is acquired at a first point in time and the second image is acquired at a second point in time later than the first image; and
- an image processing device (3) as claimed in any one of the preceding claims.

14. Image processing method comprising:
- obtaining a first image and a second image of an object of interest of a subject, wherein the first image has been acquired at a first point in time and the second image has been acquired at a second point in time later than the first image;
- generating a third image that represents an estimated representation of the object of interest at a third point in time by applying a trained algorithm or computing system that has been trained on a plurality of training images showing objects of the same type as the object of interest at different points in time; and
- outputting the generated third image.

15. Computer program comprising program code means for causing a computer to carry out the steps of the method as claimed in claim 14 when said computer program is carried out on the computer.
